# EUROPÄISCHE PATENTSCHRIFT

(11) **EP 3 240 960 B1**
(45) Veröffentlichungstag und Bekanntmachung des Hinweises auf die Patenterteilung: **20.06.2018**
(21) Anmeldenummer: 16710455.3
(22) Anmeldetag: 18.03.2016
(51) Int. Cl.: F16C 43/06, F16H 49/00, F16C 33/58

(54) **GETRIEBEEINBAUSATZ MIT EINEM ABTRIEBSLAGER UND EINEM DARAN LAGERBAREN SPANNUNGSWELLENGETRIEBE**
TRANSMISSION COMPONENT SET HAVING AN OUTPUT BEARING AND A HARMONIC DRIVE TRANSMISSION WHICH CAN BE MOUNTED THEREON
ENSEMBLE ENGRENAGE AVEC PALIER DE SORTIE ET TRANSMISSION À ONDES DE DÉFORMATION POUVANT ÊTRE MONTÉE SUR CELUI-CI

(30) Priorität: 23.03.2015 DE 102015104308
(43) Veröffentlichungstag der Anmeldung: 08.11.2017
(73) Patentinhaber: Harmonic Drive AG, 65555 Limburg/Lahn (DE)
(72) Erfinder: MENDEL, Matthias, Dr., 65549 Limburg/Lahn (DE); SCHAFFER, Michael, 65611 Niederbrechen (DE)
(74) Vertreter: Müller, Eckhard
(86) Internationale Anmeldenummer: PCT/EP2016/055946
(87) Internationale Veröffentlichungsnummer: WO 2016/150844

(56) Entgegenhaltungen:
- WO-A1-2012/157022
- DE-A1- 2 407 477
- DE-A1- 19 938 057
- US-A- 6 019 518
- US-A1- 2004 048 715

## Beschreibung

Die Erfindung betrifft einen Getriebeeinbausatz mit einem Abtriebslager und einem daran lagerbaren Spannungswellengetriebe nach dem Oberbegriff des Patentanspruchs 1.

Derartige Getriebeeinbausätze werden in vielfältiger Weise in vielen Technologiebereichen eingesetzt. Insbesondere finden derartige Getriebeeinbausätze in der Robotertechnik und auch in der Prothetik vermehrt Anwendung. Beispielhaft sei hier auf das Harmonic Drive® Getriebe verwiesen, welches zur Gruppe der Spannungswellengetriebe gehört und dessen Funktionsweise beispielhaft unter http://harmonicdrive.de/technologie/harmonic-drive-wellgetriebe/ beschrieben ist. Das Harmonic Drive Getriebe kann neben einer herkömmlichen Bauweise auch in einer sog. Flachbauweise ausgeführt sein.

In der herkömmlichen Bauweise verformt das dort als elliptischer Wave Generator ausgebildete Antriebsbauteil über ein Kugellager das als außenverzahnter Flexspline ausgebildete Übertragungsbauteil, welches sich in den gegenüberliegenden Bereichen der großen Ellipsenachse mit dem innenverzahnten, als Circular Spline ausgebildeten Rad im Eingriff befindet. Mit Drehen des Wave Generators verlagert sich die große Ellipsenachse und damit der Zahneingriffsbereich. Da der Flexspline des Harmonic Drive® Getriebes zwei Zähne weniger als der Circular Spline besitzt, vollzieht sich während einer halben Umdrehung des Wave Generators eine Relativbewegung zwischen Flexspline und Circular Spline um einen Zahn und während einer ganzen Umdrehung um zwei Zähne. Bei fixiertem Circular Spline dreht sich der Flexspline als Abtriebselement entgegengesetzt zum Antrieb. Der Circular Spline kann dabei an einem Lagerring fixierbar angeordnet sein.

Bei der Flachbauweise ist der Flexspline als ein dünnwandiger, elastisch verformbarer Ring ausgeführt, der durch den Wave Generator eine elliptische Form annimmt. Die Außenverzahnung befindet sich im Eingriff mit der Innenverzahnung des Circular Splines sowie mit einer Innenverzahnung eines zusätzlich vorgesehenen Dynamic Splines. Der Dynamic Spline ist ein innenverzahntes Hohlrad mit gleicher Zähnezahl wie der Flexspline. Er rotiert in gleicher Drehrichtung und mit gleicher Drehzahl wie der Flexspline und wird im Untersetzungsbetrieb als Abtriebselement eingesetzt.

Besonders vorteilhaft ist, dass Harmonic Drive® Getriebe über ihre gesamte Lebensdauer keine Spielzunahme in der Verzahnung aufweisen und eine hervorragende Positioniergenauigkeit von weniger als einer Winkelminute und eine Wiederholgenauigkeit von nur wenigen Winkelsekunden besitzen. Zudem sind Harmonic Drive® Getriebe wesentlich kompakter und leichter als konventionelle Getriebe, sodass sie prädestiniert für den Einsatz in der Robotik, Prothetik und dergleichen technischen Gebiete sind, bei denen Drehbewegung auf kleinstem Raum realisiert werden müssen. Da die Kraftübertragung über einen großen Zahneingriffsbereich erfolgt, können Harmonic Drive® Getriebe höhere Drehmomente als konventionelle Getriebe übertragen. Mit nur drei Bauteilen werden Untersetzungen von 30:1 bis 320:1 in einer Stufe erreicht. Im Nennbetrieb werden Wirkungsgrade bis zu 85 % erreicht. Harmonic Drive® Getriebe sind nicht selbsthemmend und weisen kein Stick-Slip-Verhalten auf. Weiterhin weisen Harmonic Drive® Getriebe über den gesamten Drehmomentbereich eine hohe Torsionssteifigkeit mit nahezu linearer Kennlinie auf. Zudem bieten Harmonic Drive® Getriebe die Möglichkeit einer zentralen Hohlwelle. Kabel, Wellen, Laserstrahlen usw. können so auf einfache Weise durch die Hohlwelle geführt werden. Harmonic Drive® Getriebe zeichnen sich durch eine hohe Zuverlässigkeit und lange Lebensdauer aus.

Derartige Spannungswellengetriebe werden zur Realisierung einer Drehbewegung zwischen zwei Bauteilen auf einen Lagerring aufgesetzt, auf oder an dem sie drehbar gelagert sind. Dabei kann einerseits das Rad des Spannungswellengetriebes drehfest zu dem Lagerring angeordnet sein, wobei dann Wälzkörper zwischen Lagerflächen des Lagerrings und des Übertragungsbauteils angeordnet sind, wodurch die Drehbarkeit des Spannungswellengetriebes gegenüber dem Lagerring gewährleistet ist. Andererseits kann aber auch das Übertragungsbauteil des Spannungswellengetriebes drehfest zu dem Lagerring angeordnet sein, wobei dann Wälzkörper zwischen Lagerflächen des Lagerrings und des Rades angeordnet sind, wodurch die Drehbarkeit des Spannungswellengetriebes gegenüber dem Lagerring ebenfalls gewährleistet ist.

Aufgrund der gängigen Bauweise derartiger Getriebeeinbausätze bauen Roboter, Prothesen und andere Vorrichtungen, welche derartige Spannungswellengetriebe zur Realisierung von Drehbewegungen verwenden, zwar schon verhältnismäßig klein. Allerdings sind diese gängigen Getriebebausätze für einige Anwendungen in ihrer axialen Auslegung immer noch zu groß und in Ihrer Montage mit separatem Lagerring zu aufwendig, sodass sie für derartige Anwendungen wirtschaftlich und technisch ungeeignet sein können.

Aus der JP 2010-127452 A ist ein Wellgetriebe für eine Roboteranwendung bekannt, bei welchem ein Wälzlager mittels Bolzen an das Rad des Wellgetriebes angeschraubt ist. Das Wälzlager selbst weist eine axiale Länge auf, die der axialen Länge des Wellgetriebes selbst entspricht, so dass diese Anordnung für die o.g. Zwecke ungeeignet ist.

Aus der DE 24 07 477 A1 ist ein Wälzlager und ein Verfahren zu seiner Herstellung bekannt. Die Druckschrift beschreibt Wälzkörper mit Stirnseiten, also Rollen und damit ein radial zu belastendes Wälzlager. Zur Herstellung des Wälzlagers werden Verschlussstücke nach dem fertig Bearbeiten der Lagerringe von den Borden abgetrennt, so dass diese ohne Nachbearbeitung ganz genau in eine durch das Abtrennen geschaffene Einfüllöffnungen für die Wälzkörper hineinpassen.

Die DE 196 81 201 D4 offenbart eine Drehmomenterfassungseinrichtung für ein elastisches Verzahnungs-Wellgetriebe.

Die DE 10 2007 025 353 A1 offenbart eine Untersetzungsgetriebeeinheit mit Drehstellungssensor.

Die WO 2014/203295 A1 offenbart ein Wellgetriebe, bei welchem das Rad gegenüber einem Lagerring gelagert ist. In der praktischen Umsetzung solcher Getriebe ist hier eine Kreuzrollenlagerung vorgesehen, bei der Wälzkörper in Form von Rollen abwechselnd in senkrechter Orientierung zueinander in die Lauffläche eingefügt werden. Dazu ist eine sich radial erstreckende Einfüllöffnung vorzusehen, durch die die Rollen in der Praxis manuell eingeführt werden, damit sie in der richtigen Orientierung in der Lauffläche angeordnet sind.

Die US 6,050, 155 A offenbart ein Harmonic-Drive Getriebe, bei welchem ein separates Wälzlager an dem Rad angeordnet und damit verschraubt wird. Auch hier vergrößert die Anordnung des separaten Wälzlagers die axiale Länge der gesamten Getriebeeineit.

Aus der US 7,905,326, B2 ist eine Drehtischvorrichtung bekannt, bei der die Drehbewegung mittels eines Wellgetriebes von einer Antriebseinheit auf den Drehtisch selbst übertragen wird. Dabei ist das Getriebeaußenzahnrad drehfest mit dem dem Drehtisch verbunden. Der Drehtisch wiederum ist durch einen Lagermechanismus gegenüber dem feststehenden Rad gelagert, wobei der Lagermechanismus separat zu dem Drehtisch und separat zu dem Rad dazwischenliegend vorgesehen ist.

Aus der US 2005/0135720 A1 ist ein Kreuzrollenlager bekannt, bei welchem die Wälzkörper in Form von Rollen kreuzweise in einer Lauffläche gelagert werden. Wie bereits im Zusammenhang mit der WO 2014/203295 A1 beschrieben, ist eine sich radial erstreckende Einfüllöffnung für die Wälzkörper vorgesehen, welche nach dem Einfüllen der Wälzkörper mit einem Stopfen radial verschlossen wird.

Aus der DE 10 2009 005 020 T5 ist ein nicht kreisförmiges Lager für einen Wellgenerator eines Wellgetriebes bekannt, wobei eine Kugeleinfüllöffnung am äußeren Umfangsrand einer steifen Nockenplatte in einem Bereich oberhalb der Nebenachse des Ovals ausgebildet ist, wo im Wesentlichen keine Belastung auftritt. Von hier aus werden die Kugeln in die Laufbahn eingefügt und danach wird die Öffnung durch einen Verschluss verschlossen.

Insgesamt gestaltet sich die Montage solcher Wellgetriebe aufwendig, wobei die Wellgetriebe großbauend sind.Es ist daher nicht möglich, mit den bekannten Getriebeeinbausätzen, welche mit einem Lagerring und einem daran lagerbaren Spannungswellengetriebe ausgestattet sind, Roboter und Prothesen oder auch anderer Vorrichtungen technisch in wirtschaftlich sinnvoller Weise zu realisieren, bei denen die Drehbewegungen auch auf kleinstem Bauraum durchgeführt werden kann.

Es ist daher Aufgabe der Erfindung, einen Getriebeeinbausatz der eingangs genannten Art derart weiterzubilden, dass eine Minimierung der axialen Länge des Getriebeeinbausatzes erreicht werden kann, sodass der Einsatz derartiger Getriebeeinbausätze auch dann erfolgen kann, wenn dafür in axialer Richtung nur sehr wenig Bauraum zu Verfügung steht. Dabei soll zudem eine einfache Montage des Getriebeeinbausatzes gewährleistet werden.

Gelöst wird diese Aufgabe durch einen Getriebeeinbausatz mit den Merkmalen des Patentanspruchs 1. Vorteilhafte Ausgestaltungen der Erfindung finden sich in den Unteransprüchen. Der erfindungsgemäße Getriebeeinbausatz weist dabei einen Lagerring und ein an dem Lagerring lagerbares Spannungswellengetriebe auf. Das Spannungswellengetriebe besteht im Wesentlichen aus einem Antriebsbauteil, einem mit einer Außenverzahnung versehenes, elastisches Übertragungsbauteil und einem mit einer Innenverzahnung versehenem Rad. Bei einem Getriebeeinbausatz in Flachbauweise ist als Abtriebsbauteil ein sog. Dynamic Spline vorgesehen, welcher als ein innenverzahntes Hohlrad mit gleicher Zähnezahl wie das Übertragungsbauteil vorgesehen ist. Die Außenverzahnung des Übertragungsbauteils greift dabei gleichzeitig in die Innenverzahnung des Rads und in die Innenverzahnung des Abtriebsbauteils ein, so dass eine Verdrehung des Übertragungsbauteils auf Grund des Eingriffs in das innenverzahnte Rad gleichzeitig eine Drehbewegung bei dem zu dem Rad koaxial angeordneten Abtriebsbauteil hervorruft.

Das Übertragungsbauteil ist auf das Antriebsbauteil aufsteckbar, wobei das Übertragungsbauteil durch das Antriebsbauteil elliptisch verformbar ist, sodass die Außenverzahnung des Übertragungsbauteils in gegenüberliegenden Bereichen einer großen Ellipsenachse mit der Innenverzahnung des Rades in Eingriff bringbar ist. Dabei ist das Rad oder das Übertragungsbauteil mit einer Lagerfläche mittels Wälzkörper an einer Lagerfläche des Lagerrings lagerbar. Hierbei ist vorgesehen, dass das Rad oder das Übertragungsbauteil bzw. der Lagerring selbst die entsprechende Lagerfläche aufweisen, d.h., dass die Lagerfläche in das jeweilige Bauteil eingebracht oder daran angeformt ist. Die Erfindung zeichnet sich dadurch aus, dass das Rad beziehungsweise das Übertragungsbauteil und der Lagerring jeweils mit wenigstens einer Aufnahme versehen sind, durch welche in einer korrespondierenden Stellung der beiden Aufnahmen zueinander Wälzkörper in ein Wälzlager zwischen der Lagerfläche des Rades beziehungsweise des Übertragungsbauteils und der Lagerfläche des Lagerrings einbringbar sind. Bei der Flachbauweise kann der Lagerring einstückig mit dem Abtriebsbauteil ausgeführt sein, so dass in einem solchen Fall eine der beiden Aufnahmen an dem einstückig mit dem Abtriebsbauteil verbundenen Lagerring, also an dem Abtriebsbauteil selbst, vorgesehen sein kann.

Durch die erfindungsgemäße Ausgestaltung des Getriebeeinbausatzes ist es ermöglicht, eine besonders kompakte und extrem flache Bauform eines derartigen Getriebeeinbausatzes zur Verfügung zu stellen, der insbesondere in der Kleinrobotik und Prothetik einsetzbar ist, wo zur Realisierung von Drehbewegungen in der Regel nur geringer Bauraum zur Verfügung steht. Die Wälzkörper, deren primäre Funktion die Lagerung des Rades auf dem Lagerring ist, können dabei - auch automatisiert -bei der Montage des Getriebeeinbausatzes in einfacher Weise in das Wälzlager zwischen der Lagerfläche des Rades beziehungsweise Übertragungsbauteils und der Lagerfläche des Lagerrings eingebracht werden. Dazu werden die beiden Aufnahmen des Rades beziehungsweise Übertragungsbauteils und des Lagerrings derart zueinander positioniert, dass sie die Einführung von Wälzkörpern in das Wälzlager zwischen der Lagerfläche des Rades beziehungsweise Übertragungsbauteils und der Lagerfläche des Lagerrings über eine axiale Stirnseite des Getriebeeinbausatzes ermöglichen. Nach der Montage des Getriebeeinbausatzes kann dieser zwischen zwei gegeneinander zu drehenden Bauteilen, beispielsweise zwei Roboterarmen platziert werden.

Dabei hat es sich als vorteilhaft erwiesen, dass das Rad beziehungsweise Übertragungsbauteil auf seiner Lagerfläche und der Lagerring auf seiner Lagerfläche Laufbahnen für die Wälzkörper aufweisen. Durch derartige Laufbahnen können die Wälzkörper in besonders geeigneter Weise eine Lagerung zwischen Lagerring und Rad beziehungsweise Übertragungsbauteil realisieren, wobei nur sehr geringe Reibungskräfte zwischen Lagerring und Rad beziehungsweise Übertragungsbauteil auftreten.

Erfindungsgemäß sind dabei die Wälzkörper als Kugeln ausgebildet, die besonders reibungsarm auf derartigen Laufflächen abrollen. Mit derartigen Wälzkörpern und Laufflächen ausgebildete Wälzlager lassen sich in besonders einfacher Weise an die jeweiligen Anwendungen in ihrer geometrischen Ausdehnung und Form anpassen. Insbesondere können hierbei auch sehr kleine Kugeln und damit auch sehr kleine Aufnahmen im Rad beziehungsweise Übertragungsbauteil und Lagerring verwendet werden, die auf den Laufbahnen des Lagerrings und des Rades beziehungsweise Übertragungsbauteils abrollen. Insofern können durch die Verwendung von kleinen Kugeln und Aufnahmen die axialen Ausmaße des Lagerrings und des Rades und somit des gesamten Getriebeeinbausatzes bereits deutlich verringert werden.

In Weiterbildung der vorliegenden Erfindung kann vorgesehen sein, dass die Form der Lagerflächen bzw. der Walzkörper zum Aufbau einer Vorspannung der Lagerung ausgebildet ist. Die Lagerung ist dabei durch die einander gegenüberliegenden Lagerflächen und die dazwischen geführten Wälzkörper gebildet. Zur Anpassung an unterschiedliche Lastzustände wird eine Vorspannung in der Lagerung aufgebaut, und so das Reibungs- und Verschleißverhalten des Getriebeeinbausatzes verbessert. Dazu kann die Form der Walzkörper und/oder der Laufbahnen, bspw. der Kugeldurchmesser, derart angepasst werden, dass in montiertem Zustand das Lager unter Vorspannung steht.

Nach einer weiteren Ausgestaltung des erfindungsgemäßen Getriebeeinbausatzes ist es vorgesehen, dass die Aufnahmen des Rades beziehungsweise Übertragungsbauteils und des Lagerrings in einer Position des Übertragungsbauteils gegenüber dem Rad derart zueinander positionierbar sind, dass die Wälzkörper außer Eingriff mit den Aufnahmen in den Laufbahnen gehalten sind, um einen Austritt der Wälzkörper zu vermeiden. Wird in einer derartigen Position des montierten Getriebeeinbausatzes mittels des Antriebsbauteils das Übertragungsbauteil angetrieben, so erfolgt auch hierbei eine Relativbewegung des Übertragungsbauteils gegenüber dem Rad, da die Wälzkörper auf den Laufbahnen des Rades beziehungsweise Übertragungsbauteils und des Lagerrings abrollen können. Sofern die Laufbahn für die Wälzkörper dabei an dem Übertragungsbauteil angeordnet ist, ist das Rad gegenüber dem Lagerring drehfest gehalten. Sofern die Laufbahn für die Wälzkörper jedoch an dem Rad angeordnet ist, ist das Übertragungsbauteil gegenüber dem Lagerring drehfest gehalten.

In einer besonderen Ausgestaltung der Erfindung ist wenigstens ein Verschlusselement, vorzugsweise ein Stopfen vorgesehen, mit dem wenigstens eine der Aufnahmen des Rades beziehungsweise Übertragungsbauteils oder des Lagerrings verschließbar ist. Hierdurch können die Aufnahmen des Rades beziehungsweise des Übertragungsbauteils und/oder des Lagerrings unter Bildung eines Zufuhrkanals entsprechend zueinander positioniert werden, durch welchen das Wälzlager zwischen Rad beziehungsweise Übertragungsbauteil und Lagerring mit Wälzkörper befüllbar ist. Nach dem Befüllen des Wälzlagers können die Aufnahmen des Rades beziehungsweise des Übertragungsbauteils und/oder des Lagerrings und damit der Zufuhrkanal durch ein derartiges Verschlusselement verschlossen werden. Hierdurch sind die eingebrachten Wälzkörper unverlierbar in dem zwischen den Lagerflächen des Rades beziehungsweise Übertragungsbauteils und des Lagerrings angeordneten Wälzlager gehalten.

Die Verschlusselemente sind dabei vorteilhafterweise derart ausgeformt, dass damit genau eine Aufnahme verschlossen wird und damit noch eine Drehung des Rades beziehungsweise Übertragungsbauteils zum Lagerring und damit die Funktion des Spannungswellengetriebes ermöglicht bleibt. Derartige Verschlusselemente werden in die als Zufuhrkanäle für die Wälzkörper des Wälzlagers ausgebildeten Aufnahmen des Rades beziehungsweise Übertragungsbauteils und des Lagerings eingeführt und verschließen diese.

Die Zufuhrkanäle sind nach einer besonderen Ausgestaltung der Erfindung parallel ausgebildet. Dabei soll unter "parallel" zu verstehen sein, dass eine Mittellängsachse des jeweiligen Zufuhrkanals parallel zur Mittellängsachse des Getriebeeinbausatzes verläuft. Andererseits können diese Zufuhrkanäle auch derart ausgebildet sein, dass ihre Mittellängsachsen die Mittellängsachse des Getriebeeinbausatzes schneiden. Eine weitere vorteilhafte Ausführung ist möglich, indem die parallele Mittellängsachse des Zufuhrkanals tangential gekippt wird.

Vorzugsweise kann vorgesehen sein, dass das Übertragungsbauteil bzw. das Rad ein Abtriebsbauteil aufweist oder damit verbunden ist, welches gegenüber dem Lagerring drehfest anordenbar ist. Auf diese Weise lässt sich die untersetzte Drehbewegung des Getriebeeinbausatzes auf dahinter liegende Bauteile übertragen.

Vorzugsweise kann vorgesehen sein, dass das Abtriebsbauteil drehfest in das Rad bzw. das Übertragungsbauteil bzw. in den Lagerring eingreift. Durch einen solchen, bevorzugt formschlüssig ausgebildeten Eingriff lässt sich die Drehbewegung besonders einfach auf nachgeschaltete Bauteile übertragen.

Bevorzugt kann das Abtriebsbauteil mit einer sich in axialer Richtung erstreckenden Verzahnung in eine dazu korrespondierende Verzahnung in dem Lagerring eingreifen. Auf diese Weise ist die Herstellung des für den Formschlusseingriff notwendigen geometrischen Aufbaus der Bauteile besonders einfach herstellbar.

Vorzugsweise kann das Abtriebsbauteil in axialer Richtung wenigstens teilweise in dem Lagerring angeordnet sein. Auf diese Weise ist eine besonders kompakte Bauweise hinsichtlich der axialen Länge des Getriebeeinbausatzes erreichbar.

In einer bevorzugten Ausführungsform kann vorgesehen sein, dass der Lagerring einstückig mit dem Abtriebsbauteil ausgebildet ist. Besonders geeignet ist diese Ausführung für die sog. Flachbauweise des Harmonic Drive Getriebes, bei welcher ein einziges Bauteil als Abtriebsbauteil dient und gleichzeitig die Funktion des Lagerrings übernimmt.

In Ausgestaltung der Erfindung kann ferner vorgesehen sein, dass das Abtriebsbauteil eine Innenverzahnung aufweist, welche insbesondere dieselbe Zähnezahl aufweist wie das Übertragungsbauteil, und in die vorzugsweise die Außenverzahnung des Übertragungsbauteils eingreift. Auf diese Weise läßt sich die axiale Länge des Getriebeeinbausatzes besonders gut verringern.

In Weiterbildung der Erfindung kann vorgesehen sein, dass der Lagerring und das Rad oder das Übertragungsbauteil mit ihren Lagerflächen und den darin angeordneten Wälzkörpern ein-Kugellager, insbesondere Radial-/Kugellager bilden, das vorzugsweise axial in entgegengesetzte Richtungen beanspruchbar ist. Auf diese Weise lässt sich der Getriebeeinbausatz besonders gut auf unterschiedlich vorliegende Belastungszustände auslegen und wirkt wie ein Vierpunktlager.

Vorzugsweise kann vorgesehen sein, dass der Getriebeeinbausatz sich im Gebrauch um einen Winkel von < 360°, vorzugsweise < 270°, insbesondere ≤ 140° verdrehen lässt. Eine solche Ausgestaltung ist besonders vorteilhaft für Anwendungen, bei denen Drehwinkel an der Abtriebsseite des Getriebeeinbausatzes von kleiner als einer vollen Umdrehung erwünscht sind. Insbesondere ist dies bei der Verwendung des erfindungsgemäßen Getriebeeinbausatzes in der Robotik, Mikrorobotik oder Prosthetic von Vorteil. Die Verwendung des Getriebeeinbausatzes mit Drehwinkeln an der Abtriebsseite von kleiner als einer vollen Umdrehung sorgt dafür, dass die Wälzkörper nach der Montage nicht mehr von selbst aus der Lagerfläche austreten können, da die Aufnahmen während des Betriebs nicht in Deckung zueinander kommen und so kein Zufuhrkanal entsteht.

Nach einem besonders vorteilhaften Gedanken der Erfindung ist dabei die axiale Länge des Getriebeeinbausatzes beziehungsweise des Antriebsbauteils, Übertragungsbauteils und des Rades kleiner oder gleich der axialen Länge des Bauteils mit der größten axialen Länge ist. Bei dieser speziellen geometrischen Ausgestaltung ist die axiale Länge des erfindungsgemäßen Getriebeeinbausatzes durch die axiale Länge des Bauteils mit der größten axialen Länge definiert. Alle weiteren Bauteile des Getriebeeinbausatzes sind dann derart anordenbar, dass über die axiale Länge des größten Bauteils kein Bauteil des Getriebeeinbausatzes herausragt. Vorzugsweise ist das Übertragungsbauteil das Bauteil mit der größten Länge, insbesondere in einstückiger Ausführung mit daran angeformtem Abtriebsbauteil.

Um eine besonders effektive und genaue Relativbewegung zwischen Übertragungsbauteil und Rad zu ermöglichen, hat es sich als vorteilhaft erwiesen, dass die Geometrie der Aufnahmen des Rades und des Lagerrings mit der Geometrie der Wälzkörper korrespondiert. Hierdurch ist ermöglicht, dass die Wälzkörper spielfrei in den Aufnahmen des Rades und des Lagerrings einbringbar sind, sodass nur die dafür vorgesehenen Wälzkörper in das Wälzlager zwischen den Lagerflächen des Rades beziehungsweise Übertragungsbauteils und des Lagerrings einbringbar sind. Bei kugelförmigen Wälzkörpern kann die Geometrie der Lagerflächen vorzugsweise rund, insbesondere kreisabschnittsförmig sein.

Weiterhin können in dem Spannungswellengetriebe des erfindungsgemäßen Getriebeeinbausatzes auch Sensoreinheiten vorgesehen sein, mit welcher beispielsweise eine Positions- beziehungsweise Lagerkennung der einzelnen Elemente des Spannungswellengetriebes oder auch Kräfte beziehungsweise Drehmomentbestimmungen oder dergleichen ermöglicht sind. Dazu kann insbesondere vorgesehen sein, dass das Getriebebeinbausatz nach einer Variante der vorstehenden Beschreibung sich dadurch auszeichnet, dass wenigstens eine Sensoreinheit vorgesehen ist, mit welcher eine Positions- beziehungsweise Lageerkennung einzelner Elemente des Spannungswellengetriebes und/oder eine Kräfte- beziehungsweise Drehmomentbestimmung oder dergleichen möglich ist.

Weitere Ziele, Vorteile, Merkmale und Anwendungsmöglichkeiten der vorliegenden Erfindung ergeben sich aus der nachfolgenden Beschreibung von Ausführungsbeispielen anhand der Figuren. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: ein Ausführungsbeispiel des erfindungsgemäßen Getriebeeinbausatzes in montiertem Zustand in einer Draufsicht entlang einer Mittellängsachse des Getreibeeinbausatzes,
- Figur 2: ein Roboter mit einem erfindungsgemäßen Getriebeeinbausatz in einer perspektivischen Ansicht,
- Figur 3: eine Ausschnittdarstellung des Roboters gemäß Figur 2,
- Figur 4: eine Schnittdarstellung des Ausschnitts gemäß Figur 3,
- Figur 5: eine Schnittdarstellung des in dem Roboter der Figuren 2 bis 5 eingesetzten Getriebebausatzes,
- Figur 6: eine Detaildarstellung eines erfindungsgemäßen Getriebeeinbausatzes in einer ersten Position,
- Figur 7: eine Detaildarstellung eines erfindungsgemäßen Getriebeeinbausatzes in einer zweiten Position,
- Figur 8: eine Schnittdarstellung eines erfindungsgemäßen Getriebeeinbausatzes,
- Figur 9: ein Ausführungsbeispiel eines Rades eines erfindungsgemäßen Getriebeeinbausatzes in einer perspektivischen Teildarstellung,
- Figur 10: ein Ausführungsbeispiel eines Lagerings eines erfindungsgemäßen Getriebeeinbausatzes in einer perspektivischen Teildarstellung,
- Figuren 11-13: das Rad gemäß Figur 9 und der Lagerring gemäß Figur 10 in unterschiedlichen Darstellungen einer Montagestellung während des Befüllens des zwischen Rad und Lagerring angeordneten Wälzlagers,
- Figur 14:: ein zweites Ausführungsbeispiel eines Rades und eines Lagerrings eines erfindungsgemäßen Getriebeeinbausatzes in einer Detailschnittdarstellung,
- Figur 15: ein weiteres Ausführungsbeispiel eines erfindungsgemäßen Getreibeeinbausatzes in einer Flachbauweise.

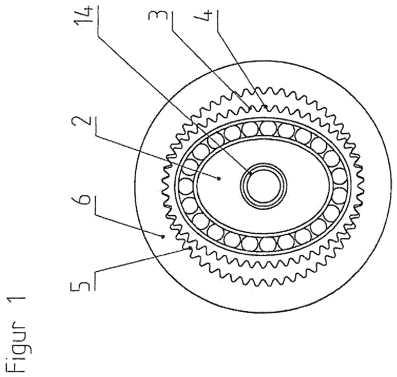

In der Figur 1 ist ein Ausführungsbeispiel des erfindungsgemäßen Getriebeeinbausatzes in montiertem Zustand in einer Draufsicht entlang einer Mittellängsachse des Getriebeeinbausatzes gezeigt. Dabei ist auf einem als elliptischer Wave-Generator ausgebildeten Antriebsbauteil 2, das auf einer Hohlwelle 14 gelagert ist, ein als Flexspline ausgebildetes Übertragungsbauteil 4 aufgesteckt, wobei das Übertragungsbauteil 4 durch das elliptische Antriebsbauteil 2 ebenfalls elliptisch verformt ist. Das elliptisch verformte Übertragungsbauteil 4 greift mit einer Außenverzahnung 3 in den gegenüberliegenden Bereichen der großen Ellipsenachse in eine Innenverzahnung 5 eines als Circular Spline ausgebildeten Rades 6 ein. Das Rad 6 ist über einen hier nicht besonders gekennzeichneten Lagerring an einem Lagerring 1 gelagert. In der Draufsicht gemäß Figur 1 unterscheidet sich der erfindungsgemäße Getriebeeinbausatz im Wesentlichen nicht von den aus dem Stand der Technik bekannten Getriebeeinbausätzen.

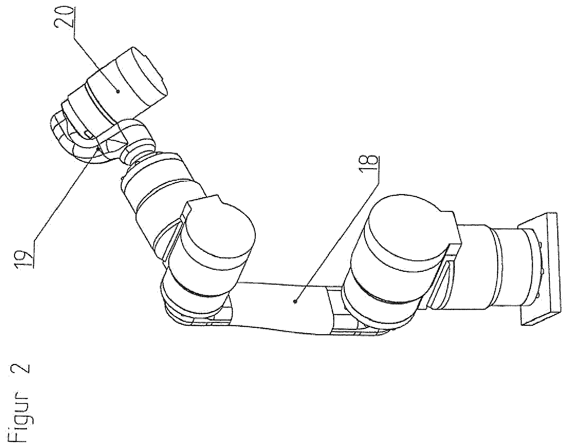

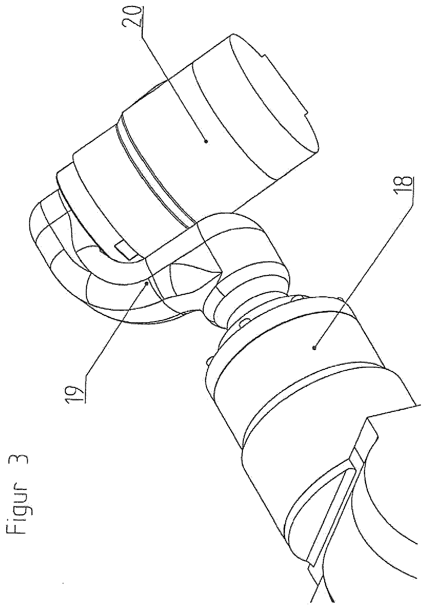

Die Figuren 2 und 3 zeigen weiter einen Roboter 18 mit verschwenkbar zueinander gehaltenem ersten und zweiten Roboterarm 19 und 20, zwischen denen ein erfindungsgemäßer Getriebeeinbausatz einsetzbar ist. Figur 2 zeigt dabei den Roboter 18 in einer Gesamtansicht, während Figur 3 einen Ausschnitt des Roboters 18 mit dem Bereich zwischen erstem und zweitem Roboterarm 19 und 20 zeigt, in dem der erfindungsgemäße Getriebeeinbausatz zur Anwendung kommt. Selbstverständlich ist es auch möglich allle Gelenke des Roboters mit einem derartigen Getriebeeinbausatz zu versehen, sodass der Roboter auch in allen anderen Roboterachsen Drehungen mit einem erfindungsgemäßer Getriebeeinbausatz durchführen kann.

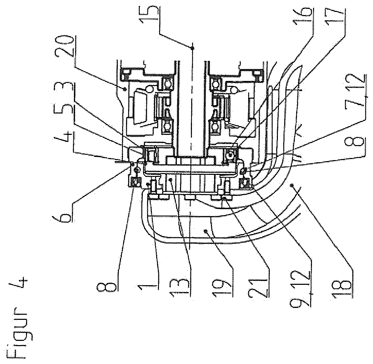

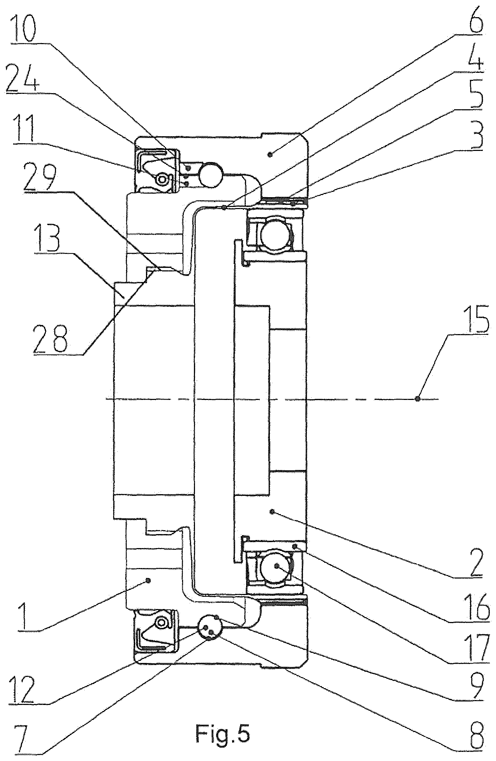

Der Unterschied zu den aus dem Stand der Technik bekannten Getriebeeinbausätzen wird insbesondere dann deutlich, wenn der erfindungsgemäße Getriebeeinbausatz in einer Seitenansicht senkrecht zu einer Mittellängsachse 15 des Getreibeeinbausatzes gezeigt wird, wie dies beispielhaft in den Figuren 4 und 5 dargestellt ist.

Insbesondere aus Figur 5 ist zu erkennen, dass das dortige Übertragungsbauteil 4 mit den daran angeformten Abtriebsbauteil 13 die größte axiale Ausdehnung aller Bauteile des Getriebeeinbausatzes aufweist. Der Getriebeeinbausatz kann aber auch so ausgestaltet sein, dass das Rad 6 die größte axiale Ausdehnung aller Bauteile aufweist. Bei dem hier beschriebenen Ausführungsbeispiel ist das Antriebsbauteil 2 als elliptischer Wave-Generator ausgebildet. Auf diesem Antriebsbauteil 2 ist über ein mehrere Kugeln 17 aufweisendes Kugellager 16 das als Flexspline ausgebildete elastische Übertragungsbauteil 4 aufgesetzt. Aufgrund der Elastizität im Bereich seiner Außenverzahnung 3 wird dieses Übertragungsbauteil 4 aufgrund der elliptischen Form des Antriebsbauteils 2 ebenfalls elliptisch verformt.

Da das elastische Übertragungsbauteil 4 eine Außenzahnung 3 aufweist und elliptisch verformt ist, steht diese Außenverzahnung 3 im Bereich der großen Ellipsenachse mit einer Innenverzahnung 5 eines als Circular Spline ausgebildeten Rades 6 in Eingriff. Dieses Rad 6 weist eine als Lagerfläche 7 ausgebildete Innenfläche auf, welche mit einer als Lagerfläche 9 ausgebildeten Außenfläche eines Lagerrings 1 korrespondiert. Dabei ist zwischen diesen beiden Lagerflächen 7 und 9 des Rades 6 und des Lagerings 1 ein Wälzlager mit einer Mehrzahl von Wälzkörpern 8 angeordnet, wobei die Lagerflächen 7 und 9 des Rades 6 und des Lagerrings 1 als Laufbahnen 12 für die Wälzkörper 8 des Wälzlagers ausgebildet sind. Die Wälzkörper 8 sind in dem vorliegenden Beispiel als Kugeln ausgebildet. Die Form der Wälzkörper 8, insbesondere deren Durchmesser, ist im Verhältnis zu den dazu im Wesentlichen korrespondierenden runden Lagerflächen 7, 9 anpassen, um die Lagerung mit einer Vorspannung zu versehen.
Die Walzkörper 8 liegen vorzugsweise an vier Punkten der Laufbahn an, um funktionell eine Vierpunktlagerung zu bilden, die axiale Belastungen in beiden Richtungen sowie radiale Belastungen und Kippmomente aufnehmen kann.

Um die erfindungsgemäße, sehr schmale und kompakte Bauweise des Getriebeeinbausatzes zu realisieren, ist in Lagerfläche 7 des Rades 6 eine Aufnahme 10 und in die Lagerfläche 9 des Lagerrings 1 eine Aufnahme 11 eingebracht. Beide Aufnahmen 10 und 11 korrespondieren dabei derart, dass sie bei entsprechender Orientierung zueinander, wie es beispielsweise in der Figur 5 dargestellt ist, geeignet sind, unter Bildung eines Zufuhrkanals 24 einen Wälzkörper 8 formschlüssig aufzunehmen. Durch dieses formschlüssige Aufnehmen eines Wälzkörpers 8 ist das Wälzlager zwischen Rad 6 und Lagerring 1 mit Wälzkörpern 8 über den Zufuhrkanal 24 befüllbar, sodass das Rad 6 gegenüber dem Lagerring 1 insbesondere spielfrei lagerbar und Lagerring 1 und Rad 6 gegeneinander verdreht werden können. In dieser Position kann nunmehr das als Flexspline ausgebildete Übertragungsbauteil 4 mittels des als Wave Generator ausgebildeten Antriebsbauteil 2 angetrieben werden, sodass eine Relativbewegung zwischen Rad 6 und Übertragungsbauteil 4 stattfindet.

Aufgrund einer Fixierung des Übertragungsbauteils 4 mittels eines Abtriebsbauteils 13 an dem Lagerring 1 dreht sich im vorliegenden Ausführungsbeispiel das Rad 6 gegenüber dem Übertragungsbauteil 4. Das Übertragungsbauteil 4 ist in der vorliegenden Ausführungsform durch einen Zahneingriff drehfest und unter Formschluss mit dem Lagerring 1 verbunden. Das Abtriebsbauteil 13 ist in der vorliegenden Ausführungsform einstückig an das Übertragungsbauteil 4 angeformt.

Mittels des an dem Übertragungsbauteil 4 angeordneten Abtriebsbauteil 13 kann die Drehbewegung des Übertragungsbauteils 4 an weitere Bauelemente innerhalb der Einrichtung, in welcher der Getriebeeinbausatz eingesetzt werden soll, übertragen werden.

Die in das Rad 6 bzw. den Lagerring 1 eingebrachten Laufbahnen 12 sind in der vorliegenden Ausführungsform so ausgebildet, dass die Lagerung sowohl radial wirkende Kräfte als auch Axialbelastungen entlang der Mittellängsachse 15 in beiden Richtungen aufnehmen kann.

Das Abtriebsbauteil 13 ist in axialer Richtung wenigstens teilweise innerhalb des Lagerrings 1 angeordnet und ist auf Grund seines am Umfang angebrachten radialen Zahneingriffs in den Lagerring 1 besonders platzsparend ausgeführt. Der Zahneingriff erfolgt über eine Verzahnung 28 an dem Abtriebsbauteil 13, die in eine Verzahnung 29 an dem Lagerring 1 eingreift.

In der Figur 5 ist auch sehr gut zu erkennen, dass die Bauteile des Getriebeeinbausatzes, nämlich der Lagerring 1, das Antriebsbauteil 2, das Übertragungsbauteil 4 und das Rad 6 koaxial um eine Mittellängsachse 15 des Getriebeeinbausatzes angeordnet sind.

Mittels der in der Figur 5 gezeigten und zuvor beschriebenen formschlüssigen Ausgestaltung eines Wälzkörpers 8 und der Aufnahmen 10 und 11 des Rades 6 und des Lagerrings 1 ist es nunmehr möglich, einen in axialer Richtung sehr kompakten und schmalen Getriebeeinbausatz zur Verfügung zu stellen, der insbesondere dann zur Anwendung kommen kann, wenn zur Realisierung von Drehbewegungen nur sehr wenig Bauraum zur Verfügung steht, wie dies insbesondere bei vielen Anwendungen in Robotik und Prothetik der Fall ist, wobei eine einfache Montage des Getriebeeinbausatzes gegeben ist.

In Figur 4 ist dabei nochmals der Getriebeeinbausatz der Figur 5 dargestellt, allerdings nun im Zustand, in dem er bereits in einen Roboter 18 eingebaut ist. Deutlich ist hierbei zu erkennen, dass der axiale Bauraum für den Getriebeeinbausatz sehr gering ist, sodass der erfindungsgemäße Getriebeeinbausatz insbesondere für Anwendungen geeignet ist, bei denen zur Realisierung von Drehbewegungen nur wenig Bauraum zur Verfügung steht. Das Übertragungsbauteil 4 ist dabei mit seinem Abtriebsbauteil 13 mittels Schraubverbindungen 21 und zusammen mit dem Lagerring 1 drehfest an einem ersten Roboterarm 19 des Roboters 18 gehalten, während das Rad 6 drehfest mit einem zweiten Roboterarm 20 des Roboters 18 gefügt ist.

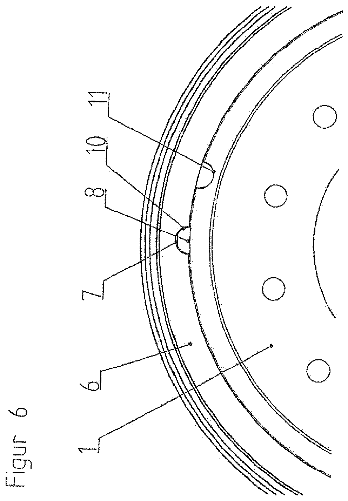

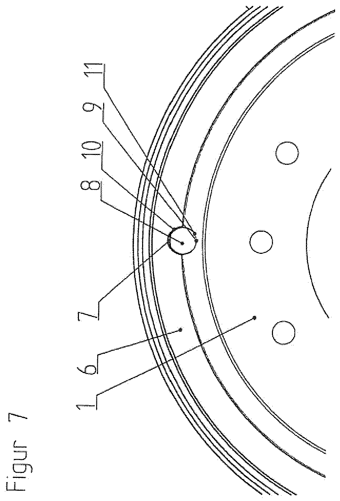

In den Figuren 6 und 7 sind zwei unterschiedliche Positionen der Aufnahmen 10 und 11 des Rades 6 und des Lagerrings 1 dargestellt.

In der Darstellung der Figur 6 sind die Aufnahmen 10 und 11 des Rades 6 und des Lagerrings 1 derart gegeneinander positioniert, dass sie nicht miteinander korrespondieren. Auch wenn dann ein Wälzkörper 8 eine Position einnimmt, die mit der Aufnahme 10 in der Lagerfläche 7 des Rades 6 korrespondiert, wie dies in Figur 6 dargestellt ist, kann der Wälzkörper 8 nicht in diese Aufnahme 10 des Rades 6 eindringen, da er aufgrund einer dort nicht vorhandenen korrespondierenden Aufnahme in der Lagerfläche 9 des Lagerrings 1 gezwungen ist, in der Laufbahn 12 für die Wälzkörper 8 zu verbleiben. In dieser Position können Rad und Lagerring eine relative Drehbewegung gegeneinander ausführen, sodass eine relative Drehbewegung zwischen dem Rad 6 und dem Übertragungsbauteil 4 erfolgt, wenn das Antriebsbauteil 2 angetrieben beziehungsweise gedreht wird.

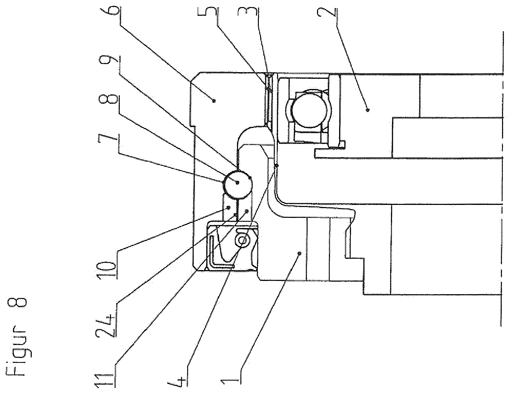

Im Gegensatz dazu sind in der Darstellung gemäß Figur 7 die Aufnahme 10 und 11 des Rades 6 und des Lagerrings 1 derart gegeneinander positioniert, dass ein Wälzkörper 8 wenigstens zum Teil aufnehmbar ist. Die Aufnahmen 10 und 11 des Rades 6 und des Lagerrings 1 sind dabei derart ausgestaltet, dass das Aufnehmen des Wälzkörpers 8 formschlüssig erfolgt, sodass der Lagerring 1 und das Rad 6 spielfrei gegeneinander fixierbar sind. Eine andere Darstellung dieser Positionierung der Aufnahmen 10 und 11 des Rades 6 und des Lagerrings 1 ist in Figur 8 gezeigt.
Hierbei ist in Figur 8 deutlich zu erkennen, dass der Wälzkörper 8 bei dieser Positionierung der Aufnahmen 10 und 11 in diese eindringen kann und dabei den Lagerring 1 und das Rad 6 spielfrei gegeneinander fixiert.

Um die mittels des durch die Aufnahmen 10 und 11 des Rades 6 und des Lagerrings 1 gebildeten Zufuhrkanals 24 in das Wälzlager zwischen Rad 6 und Lagerrings eingebrachten Wälzkörper 8 unverlierbar zu halten, können Verschlusselemente 22, 23 vorgesehen sein. Derartige Verschlusselemente 22, 23 können beispielsweise als Stopfen 22, 23 ausgebildet sein, die in die durch die Aufnahmen 10 und 11 gebildeten Zufuhrkanälen 24 einbringbar sind. Die Zufuhrkanäle 24 können, wie in Figur 8 verdeutlicht, derart angeordnet sein, dass deren Mittellängsachse parallel zu der Mittellängsachse 15 des Getriebeeinbausatzes verläuft. Diese Stopfen können nur erforderlich werden, wenn an der Abtriebsseite des Getriebeeinbausatzes Drehwinkel von größer oder gleich 360° durchlaufen werden. Bei Verdrehungen unter 360° kann auf die Stopfen 22, 23 auch deshalb verzichtet werden, da die Aufnahmen 10, 11 während des Betriebs nicht in Deckung kommen und somit die Walzkörper 8 zwischen den Lageflächen 7, 9 gefangen sind.

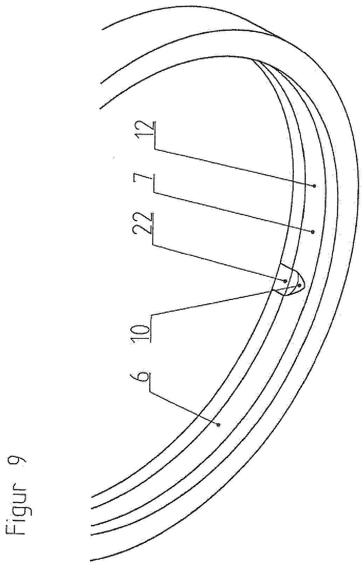

In Figur 9 ist nunmehr ein Ausführungsbeispiel eines Rades 6 eines erfindungsgemäßen Getriebeeinbausatzes in einer perspektivischen Teildarstellung gezeigt. Das Rad 6 ist dabei auf seiner Innenfläche mit einer als Laufbahn 12 ausgebildeten Lagerfläche 7 für hier nicht dargestellte Wälzkörper 8 eines zwischen dem Rad 6 und einem Lagerring 1 angeordneten Wälzlagers versehen. Ferner weist das Rad 6 eine Aufnahme 10 auf, welche mittels eines als Stopfen 22 ausgebildeten Verschlusselements 22 verschließbar ist. Der Stopfen 22 und die Aufnahme 10 weisen dabei im Querschnitt dieselbe halbkreisförmige Form auf.

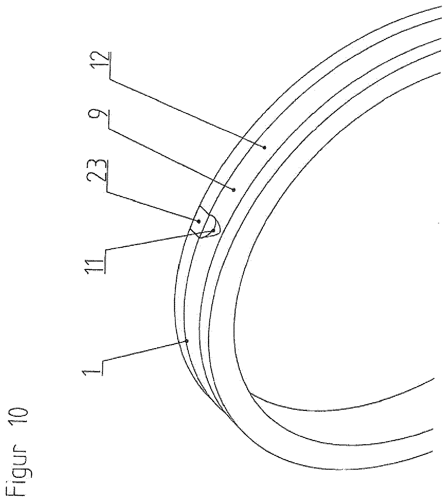

Analog dazu ist in Figur 10 ein Ausführungsbeispiel eines Lagerings 1 eines erfindungsgemäßen Getriebeeinbausatzes in einer perspektivischen Teildarstellung gezeigt. Der Lagerring 1 ist dabei auf seiner Außenfläche mit einer als Laufbahn 12 ausgebildeten Lagerfläche 9 für hier nicht dargestellte Wälzkörper 8 eines zwischen dem Rad 6 und dem Lagerring 1 angeordneten Wälzlagers versehen. Ferner weist der Lagerring 1 eine Aufnahme 11 auf, welche mittels eines als Stopfen 23 ausgebildeten Verschlusselements 23 verschließbar ist. Der Stopfen 23 und die Aufnahme 11 weisen dabei im Querschnitt dieselbe halbkreisförmige Form auf und entsprechen dabei auf der Form des in der Figur 9 dargestellten Stopfens 22 und der Aufnahme 10 des Rades 6.

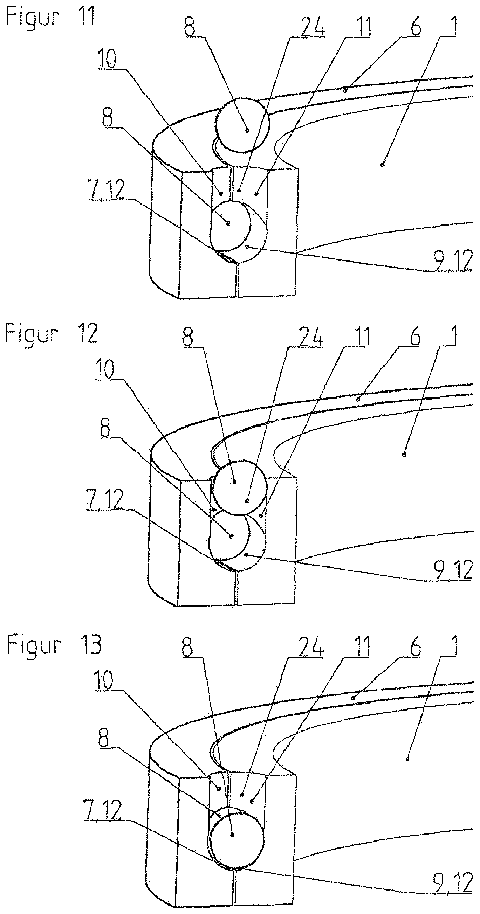

Figur 11 zeigt nunmehr das Rad 6 der Figur 9 und den Lagerring 1 der Figur 10 in einer ersten Montagestellung während des Befüllens des zwischen Rad 6 und Lagerring 1 angeordneten Wälzlagers mit Wälzkörpern 8. Deutlich zu erkennen ist hierbei die Positionierung der halbkreisförmigen Aufnahmen 10 und 11 des Rades 6 und des Lagerrings 1 zueinander, wobei sie nicht mit den Stopfen 22 und 23 verschlossen sind und einen Zuführkanal für die Wälzkörper 8 des zwischen Rad 6 und Lagerring vorgesehenen Wälzlagers bilden. Lagerring 1 und Rad 6 sind dabei ausgestaltet, dass ihre als Laufbahnen 12 ausgebildeten Lagerflächen 7 und 9 ein spielfreies Abwälzen der Wälzkörper 8 ermöglichen. In das Wälzlager zwischen Rad 6 und Lagerring 1 ist in der Darstellung der Figur 11 bereits ein Wälzkörper 8 eingebracht, während ein weiterer in dieser Darstellung im Querschnitt dargestellter Wälzkörper 8 dem durch die Aufnahmen 10 und 11 gebildeten Zufuhrkanal 24 angenähert wird.

In der Darstellung der Figur 12 ist das Rad 6 der Figur 9 und der Lagerring 1 der Figur 10 in einer zweiten Darstellung einer Montagestellung während des Befüllens des zwischen Rad 6 und Lagerring 1 angeordneten Wälzlagers gezeigt, wobei der im Querschnitt dargestellte Wälzkörper 8 nun bereits in den durch die Aufnahmen 10 und 11 gebildeten Zufuhrkanal 24 eingeführt ist.

In der Darstellung der Figur 13 ist das Rad 6 der Figur 9 und der Lagerring 1 der Figur 10 in einer dritten Darstellung einer Montagestellung während des Befüllens des zwischen Rad 6 und Lagerring 1 angeordneten Wälzlagers gezeigt, wobei der im Querschnitt dargestellte Wälzkörper 8 nun bereits vollständig den durch die Aufnahmen 10 und 11 gebildeten Zufuhrkanal 24 passiert hat und zwischen den Laufbahnen 12 der Lagerflächen 7 und 9 des Rades 6 und des Lagerrings 1 im Wälzlager positioniert ist.

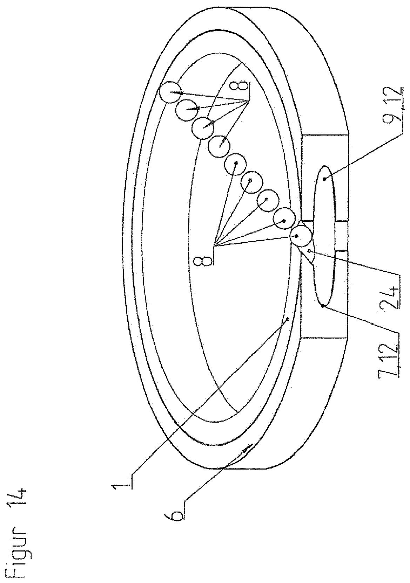

In Figur 14 ist ein zweites Ausführungsbeispiel eines Rades 6 und eines Lagerrings 1 eines erfindungsgemäßen Getriebeeinbausatzes in einer Detailschnittdarstellung dargestellt. Dieses Ausführungsbeispiel entspricht im Wesentlichen dem der Figuren 9 bis 13, wobei hier allerdings der Zuführkanal 24 für die Wälzkörper 8 schräg in den Lagerring 1 und das Rad 6 eingelassen ist. Hierdurch können die Wälzkörper 8 beim Einfüllen in die Laufbahn 12 ihre kinetische Energie nutzen, um sich in der Laufbahn 12, welche durch die Lagerflächen 7 und 9 des Rades 6 und des Lagerings 1 begrenzt ist, zu verteilen.

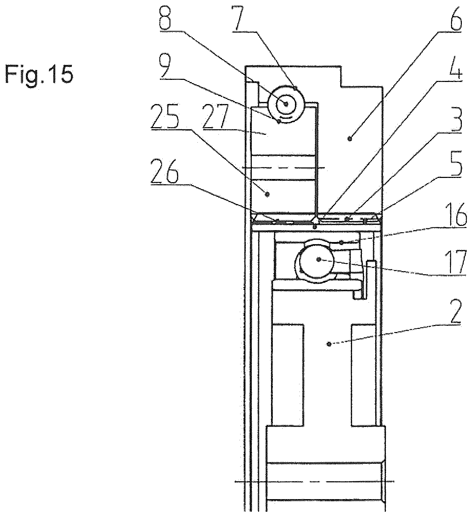

In Figur 15 ist ein weiteres Ausführungsbeispiel eines erfindungsgemäßen Getriebeeinbausatzes in einer Flachbauweise dargestellt. Im Wesentlichen entspricht dieser Getriebebausatz hinsichtlich seiner Funktionsweise den zuvor beschriebenen Ausführungsbeispielen. Allerdings ist das dem Abtriebsbauteil 13 entsprechende Bauteil hier als Dynamic Spline 25 ausgebildet. Dieser Dynamic Spline 25 weist dabei eine Innenverzahnung 26 auf, die wie die Innenverzahnung 5 des Rades 6 mit der Außenverzahnung 3 des als Flexspline ausgebildeten Übertragungsbauteils 4 kämmt.

An dem Dynamic Spline 25 ist eine Lagerfläche 9 angeformt, in der die Wälzkörper 8 zur Lagerung des Dynamic Spline 25 an dem Rad 6 laufen können. Die Wälzkörper 8 laufen in einer zur Lagerfläche 9 gegenüberliegenden Lagerfläche 7 an dem Rad. Die Lagerfläche 7 ist in das Rad 6 eingeformt. Somit ist die Funktion und auch die Aufnahme 11 des Lagerrings 1 mit dem Dynamic Spline 25 integriert, so dass dieser auch das dem Abtriebsbauteil 13 entsprechende Abtriebsbauteil 27 bei dem Getriebeeinbausatz in Flachbauweise bildet.

In dieser Ausführungsform erstreckt sich das Übertragungsbauteil 4 mit seiner axialen Länge sowohl über die axiale Erstreckung der Innenverzahnung 5 des Rades 6, als auch über die axiale Erstreckung der Innenverzahnung 26 des Dynamic Spline 25, wobei die Außenverzahnung 3 des Übertragungsbauteils 4 jeweils gleichzeitig in die Innenverzahnung 5 des Rades 6 als auch in die Innenverzahnung 26 des Dynamic Spline 25 eingreift, um die durch das Antriebsbauteil 2 an dem Übertragungsbauteil 4 hervorgerufene, untersetzte Drehbewegung auf das Abtriebsbauteil 27 zu übertragen, was wiederum durch formschlüssigen Eingriff der Außenverzahnung 3 an der Innenverzahnung 26 erfolgt.

In der vorliegenden Ausführungsform ist das Rad 6 das Bauteil des Getriebeeinbausatzes, welches die größte axiale Ausdehnung aufweist.

### Bezugszeichenliste

- 1: Lagerring
- 2: Antriebsbauteil
- 3: Außenverzahnung
- 4: Übertragungsbauteil
- 5: Innenverzahnung
- 6: Rad
- 7: Lagerfläche
- 8: Wälzkörper
- 9: Lagerfläche
- 10: Aufnahme
- 11: Aufnahme
- 12: Laufbahn
- 13: Abtriebsbauteil
- 14: Hohlwelle
- 15: Mittellängsachse
- 16: Kugellager
- 17: Kugel
- 18: Roboter
- 19: erster Roboterarm
- 20: zweiter Roboterarm
- 21: Schraubverbindung
- 22: Verschlusselement ,Stopfen
- 23: Verschlusselement, Stopfen
- 24: Zufuhrkanal
- 25: Dynamic Spline
- 26: Innenverzahnung Dynamic Spline
- 27: Abtriebsbauteil
- 28: Verzahnung
- 29: Verzahnung

## Patentansprüche

1. Getriebeeinbausatz mit einem Lagerring (1) und einem daran lagerbaren Spannungswellengetriebe, welches ein Antriebsbauteil (2), ein mit einer Außenverzahnung (3) versehenes, elastisches Übertragungsbauteil (4) und ein mit einer Innenverzahnung (5) versehenes Rad (6) aufweist, wobei das Übertragungsbauteil (4) auf das Antriebsbauteil (2) aufsteckbar und dabei durch das Antriebsbauteil (2) derart elliptisch verformbar ist, dass die Außenverzahnung (3) des Übertragungsbauteils (4) in gegenüberliegenden Bereichen einer großen Ellipsenachse mit der Innenverzahnung (5) des Rades (6) in Eingriff bringbar ist, wobei das Rad (6) oder das Übertragungsbauteil (4) eine Lagerfläche (7) aufweist und mit der Lagerfläche (7) mittels Wälzkörper (8) an einer Lagerfläche (9) des Lagerrings (1) lagerbar ist, **dadurch gekennzeichnet, dass** die Walzkörper kugelförmig ausgebildet sind und das Rad (6) beziehungsweise das Übertragungsbauteil (4) und der Lagerring (1) jeweils mit wenigstens einer Aufnahme (10, 11) versehen sind, durch welche in einer korrespondierenden Stellung der beiden Aufnahmen (10, 11) zueinander Wälzkörper (8) in ein Wälzlager zwischen der Lagerfläche (7) des Rades (6) beziehungsweise des Übertragungsbauteils (4) und der Lagerfläche (9) des Lagerrings (1) einbringbar sind.

2. Getriebeeinbausatz nach Anspruch 1, **dadurch gekennzeichnet, dass** das Rad (6) beziehungsweise das Übertragungsbauteil (4) auf seiner Lagerfläche (7) und der Lagerring (1) auf seiner Lagerfläche (9) Laufbahnen (12) für die Wälzkörper (8) aufweisen, insbesondere dass die Form der Laufflächen (7, 9) mit der Form der Wälzkörper (8) korrespondieren.

3. Getriebeeinbausatz nach einem der vorhergehenden Ansprüche, **dadurch gekennzeichnet, dass** die Form der Lagerflächen (7, 9) bzw. der Walzkörper 8 zum Aufbau einer Vorspannung der Lagerung ausgebildet sind.

4. Getriebeeinbausatz nach einem der vorhergehenden Ansprüche **dadurch gekennzeichnet, dass** die Aufnahmen (10, 11) des Rades (6) beziehungsweise des Übertragungsbauteils (4) und des Lagerringes (1) in einer Position des Übertragungsbauteils (4) gegenüber dem Rad (6) derart zueinander positionierbar sind, dass die Wälzkörper (8) außer Eingriff mit den Aufnahmen (10, 11) in den Laufbahnen (12) gehalten sind.

5. Getriebeeinbausatz nach einem der vorhergehenden Ansprüche, **dadurch gekennzeichnet, dass** wenigstens ein Verschlusselement (22, 23), vorzugsweise ein Stopfen vorgesehen ist, mit dem wenigstens eine der Aufnahmen (10, 11) des Rades (6) oder des Lagerrings (1) verschließbar ist, wobei die Form des Verschlusselementes mit der Form der jeweiligen Aufnahme korrespondiert.

6. Getriebeeinbausatz nach einem der vorhergehenden Ansprüche, **dadurch gekennzeichnet, dass** das Übertragungsbauteil (4) beziehungsweise das Rad (6) ein Abtriebsbauteil (13) aufweist oder damit verbunden ist, welches gegenüber dem Lagerring (1) drehfest anordenbar ist.

7. Getriebeeinbausatz nach Anspruch 6, **dadurch gekennzeichnet, dass** das Abtriebsbauteil (13, 27) drehfest in das Rad (6) bzw. das Übertragungsbauteil (4) bzw. in den Lagerring (1) eingreift.

8. Getriebeeinbausatz nach Anspruch 6 oder 7, **dadurch gekennzeichnet, dass** das Abtriebsbauteil (13) mit einer sich in axialer Richtung erstreckenden Verzahnung in eine dazu korrespondierende Verzahnung (28, 29) in dem Lagerring (1) eingreift.

9. Getriebeeinbausatz nach einem der Ansprüche 6 bis 8, **dadurch gekennzeichnet, dass** das Abtriebsbauteil (13) in axialer Richtung wenigstens teilweise in dem Lagerring (1) angeordnet ist.

10. Getriebeeinbausatz nach Anspruch 6 bis 9, **dadurch gekennzeichnet, dass** der Lagerring (1) einstückig mit einem Abtriebsbauteil (27) ausgebildet ist.

11. Getriebeeinbausatz nach Anspruch 10, **dadurch gekennzeichnet, dass** das Abtriebsbauteil (27) eine Innenverzahnung (26) aufweist, welche insbesondere dieselbe Zähnezahl aufweist wie das Übertragungsbauteil (4) und in die vorzugsweise die Außenverzahnung (3) des Übertragungsbauteils (4) eingreift.

12. Getriebeeinbausatz nach einem der Ansprüche 6 bis 11, **dadurch gekennzeichnet, dass** das Abtriebsbauteil (13, 27) in Betriebsstellung um einen Drehwinkel von kleiner als 360°, vorzugsweise kleiner als 270°, insbesondere kleiner oder gleich 140° verdrehbar ist.

13. Getriebeeinbausatz nach einem der vorhergehenden Ansprüche, **dadurch gekennzeichnet, dass** die axiale Länge des Getriebeeinbausatzes beziehungsweise des Antriebsbauteils (2), des Übertragungsbauteils (4) und des Rades (6) kleiner oder gleich der axialen Länge des Bauteils (1, 2, 4, 6, 13) mit der größten axialen Länge ist.

14. Getriebeeinbausatz nach einem der vorhergehenden Ansprüche, **dadurch gekennzeichnet, dass** die Geometrie der Aufnahmen (10, 11) des Rades (6) und des Lagerrings (1) mit der Geometrie der Wälzkörper (8) korrespondieren.

15. Getriebeeinbausatz nach einem der vorhergehenden Ansprüche, **dadurch gekennzeichnet, dass** der Lagerring (1), das Rad (6) oder das Übertragungsbauteil (4) mit ihren Lagerflächen (7, 9) und den darin angeordneten kugelförmigen Wälzkörpern (8) ein Kugellager, insbesondere Radial-/ Kugellager bilden, das vorzugsweise axial in entgegengesetzten Richtungen beanspruchbar ist.

## Claims

1. Gearing component set with a bearing ring (1) and a strain wave gearing which can be mounted thereat and which has a drive component (2), an elastic transmission component (4) provided with external teeth (3), and a wheel (6) provided with internal teeth (5), wherein the transmission component (4) can be plugged onto the drive component (2) and at that can be elliptically deformed by the drive component (2) in such a manner that the external teeth (3) of the transmission component (4) can be brought into mesh with the internal teeth (5) of the wheel (6) in opposite areas of a large ellipse axis, wherein the wheel (6) or the transmission component (4) comprises a bearing surface (7) and is supportable with the bearing surface (7) at a bearing surface (9) of the bearing ring (1) by means of rolling elements (8), **characterized in that** the rolling elements are formed in a spherical manner and the wheel (6) or the transmission component (4) and the bearing ring (1) are each provided with respectively at least one reception area (10, 11) through which rolling elements (8) can be inserted into a roller bearing between the bearing surface (7) of the wheel (6) or of the transmission component (4), respectively, and the bearing surface (9) of the bearing ring (1) when the two reception areas (10, 11) are in a corresponding position with respect to one another.

2. Gearing component set according to claim 1, **characterized in that** the wheel (6) or the transmission component (4), respectively, on its bearing surface (7), as well as the bearing ring (1), on its bearing surface (9), have tracks (12) for the rolling elements (8), in particular **in that** the shape of the running tread surfaces (7, 9) corresponds to the shape of the rolling elements (8).

3. Gear box component set according to one of the preceding claims, **characterized in that** the shape of the bearing surfaces (7, 9) or of the rolling elements 8 is embodied for generating a pre-stress of the bearing.

4. Gear box component set according to one of the preceding claims, **characterized in that** the reception areas (10, 11) of the wheel (6) or of the transmission component (4) and of the bearing ring (1) can be positioned in such a manner with respect to each other if the transmission component (4) is positioned opposite the wheel (6), that the rolling elements (8) are kept in the tracks (12) out of mesh with the reception areas (10, 11).

5. Gear box component set according to one of the preceding claims, **characterized in that** at least one closing element (22, 23), preferably a plug, is provided, by means of which at least one of the reception areas (10, 11) of the wheel (6) or of the bearing ring (1) can be closed, wherein the shape of the closing element corresponds to the shape of the respective reception area.

6. Gear box component set according to one of the preceding claims, **characterized in that** the transmission component (4) or the wheel (6) has an output component (13) or is connected to an output component (13) which can be arranged opposite the bearing ring (1) in a torque-proof manner.

7. Gear box component set according to claim 6, **characterized in that** the output component (13, 27) meshes in a torque-proof manner with the wheel (6) or the transmission component (4) or the bearing ring (1).

8. Gear box component set according to claim 6 or 7, **characterized in that** the output component (13) meshes, with a gearing that extends in the axial direction, with a gearing (28, 29) in the bearing ring (1) corresponding thereto.

9. Gear box component set according to one of the claims 6 to 8, **characterized in that**, in the axial direction, the output component (13) is arranged at least partially inside the bearing ring (1).

10. Gear box component set according to claim 6 to 9, **characterized in that** the bearing ring (1) is formed in one piece with the output component (27).

11. Gear box component set according to claim 10, **characterized in that** the output component (27) has internal teeth (26), which in particular has the same number of teeth as the transmission component (4) and preferably meshes with the external teeth (3) of the transmission component (4).

12. Gear box component set according to one of the claims 6 to 11, **characterized in that** the output component (13, 27) can be rotated in operating position by a rotational angle of smaller than 360°, preferably smaller than 270°, in particular smaller than or equal to 140°.

13. Gear box component set according to one of the preceding claims, **characterized in that** the axial length of the gear box installation kit or of the drive component (2), of the transmission component (4) and of the wheel (6) is smaller or equal to the axial length of the structural component (1, 2, 4, 6, 13) with the greatest axial length.

14. Gear box component set according to one of the preceding claims, **characterized in that** the geometry of the reception areas (10, 11) of the wheel (6) and of the bearing ring (1) correspond to the geometry of the rolling elements (8).

15. Gear box component set according to one of the preceding claims, **characterized in that**, with their bearing surfaces (7, 9) and the spherical rolling elements (8) arranged therein, the bearing ring (1), the wheel (6) or the transmission component (4) form a ball bearing, in particular a radial / ball bearing, which can preferably be stressed axially in opposite directions.

## Revendications

1. Jeu de garnitures de transmission présentant une bague de palier (1) sur lequel peut être montée une transmission d'arbre de serrage qui présente un composant d'entraînement (2), un composant élastique de transfert (4) doté d'une denture extérieure (3) et une roue (6) dotée d'une denture intérieure (5),
le composant de transfert (4) pouvant être enfiché sur le composant d'entraînement (2) et pouvant ainsi être déformé elliptiquement par le composant d'entraînement (2) de telle sorte que la denture extérieure (3) du composant de transfert (4) puisse être amenée à s'engager dans des parties opposées du grand axe de l'ellipse sur la denture intérieure (5) de la roue (6),
la roue (6) ou le composant de transfert (4) présentant une surface de palier (7) et pouvant être montés par la surface de palier (7) sur une surface de palier (9) de la bague de palier (1) au moyen de corps de roulement (8),
**caractérisé en ce que**
les corps de roulement ont une forme sphérique et la roue (6) ou le composant de transfert (4) et la bague de palier (1) sont tous dotés d'au moins un logement (10, 11) par lequel des corps de roulement (8) peuvent être insérés dans un palier de roulement situé entre la surface de palier (7) de la roue (6) ou entre le composant de transfert (4) et la surface de palier (9) de la bague de palier (1) lorsque les deux logements (10, 11) sont en position mutuellement correspondante.

2. Jeu de garnitures de transmission selon la revendication 1, **caractérisé en ce que** la roue (6) ou le composant de transfert (4) présentent sur la surface de palier (7) des pistes de roulement (12) pour les corps de roulement (8), la bague de palier (1) présente sur sa surface de palier (9) des pistes de roulement (12) pour les corps de roulement (8) et en particulier **en ce que** la forme des surfaces de roulement (7, 9) correspond à la forme des corps de palier (8).

3. Jeu de garnitures de transmission selon l'une des revendications précédentes, **caractérisé en ce que** la forme des surfaces de palier (7, 9) ou des corps de roulement (8) est configurée pour établir une précontrainte du palier.

4. Jeu de garnitures de transmission selon l'une des revendications précédentes, **caractérisé en ce que** les logements (10, 11) de la roue (6) ou du composant de transfert (4) et de la bague de palier (1) peuvent être placés l'un par rapport à l'autre lorsque le composant de transfert (4) est situé dans une position par rapport à la roue (6) de telle sorte que les corps de roulement (8) soient désengagés des logements (10, 11) prévus dans les pistes de roulement (12).

5. Jeu de garnitures de transmission selon l'une des revendications précédentes, **caractérisé en ce qu'**au moins un élément de fermeture (22, 23), de préférence un bouchon, est prévu, par lequel au moins l'un des logements (10, 11) de la roue (6) ou de la bague de palier (1) peuvent être fermés, la forme de l'élément de fermeture correspondant à la forme du logement concerné.

6. Jeu de garnitures de transmission selon l'une des revendications précédentes, **caractérisé en ce que** le composant de transfert (4) ou la roue (6) présentent un composant entraîné (13) ou sont reliés à un tel composant qui peut être disposé à rotation solidaire par rapport à la bague de palier (1).

7. Jeu de garnitures de transmission selon la revendication 6, **caractérisé en ce que** le composant entraîné (13, 27) engage à rotation solidaire la roue (6), le composant de transfert (4) ou la bague de palier (1).

8. Jeu de garnitures de transmission selon les revendications 6 ou 7, **caractérisé en ce que** le composant entraîné (13) s'engage par une denture qui s'étend dans la direction axiale dans une denture correspondante (28, 29) ménagée dans la bague de palier (1).

9. Jeu de garnitures de transmission selon l'une des revendications 6 à 8, **caractérisé en ce que** le composant entraîné (13) est disposé au moins en partie dans la bague de palier (1) dans la direction axiale.

10. Jeu de garnitures de transmission selon les revendications 6 à 9, **caractérisé en ce que** la bague de palier (1) est formée d'un seul tenant avec le composant entraîné (27).

11. Jeu de garnitures de transmission selon la revendication 10, **caractérisé en ce que** le composant entraîné (27) présente une denture intérieure (26) qui présente en particulier le même nombre de dents que le composant de transfert (4) et dans laquelle la denture extérieure (3) du composant de transfert (4) s'engage de préférence.

12. Jeu de garnitures de transmission selon l'une des revendications 6 à 11, **caractérisé en ce que** le composant entraîné (13, 27) peut tourner en position de fonctionnement sur un angle de rotation inférieur à 360° et de préférence inférieur à 270°, en particulier inférieur ou égal à 140°.

13. Jeu de garnitures de transmission selon l'une des revendications précédentes, **caractérisé en ce que** la longueur axiale du jeu de garnitures de transmission ou du composant d'entraînement (2), du composant de transfert (4) et de la roue (6) est inférieure ou égale à la longueur axiale du composant (1, 2, 4, 6, 13) qui présente la plus grande longueur axiale.

14. Jeu de garnitures de transmission selon l'une des revendications précédentes, **caractérisé en ce que** la géométrie des logements (10, 11) de la roue (6) et de la bague de palier (1) correspond à la géométrie des corps de roulement (8).

15. Jeu de garnitures de transmission selon l'une des revendications précédentes, **caractérisé en ce que** la bague de palier (1), la roue (6) ou le composant de transfert (4) forment avec leurs surfaces de palier (7, 9) et les corps de roulement sphériques (8) qui y sont disposés un palier à billes, en particulier un palier radial à billes qui peut être sollicité de préférence axialement dans la direction opposée.
